# EUROPEAN PATENT SPECIFICATION

(11) **EP 3 235 105 B1**
(45) Date of publication and mention of the grant of the patent: **03.10.2018**
(21) Application number: 15801548.7
(22) Date of filing: 08.11.2015
(51) Int. Cl.: H02J 50/10

(54) **METHODS AND SYSTEMS FOR HARVESTING WELD CABLE ENERGY TO POWER WELDING SUBSYSTEMS**
VERFAHREN UND SYSTEME ZUM ERNTEN VON SCHWEISSKABELENERGIE ZUR VERSORGUNG VON SCHWEISSSUBSYSTEMEN
PROCÉDÉS ET SYSTÈMES DE COLLECTE DE L'ÉNERGIE D'UN CÂBLE DE SOUDAGE POUR ALIMENTER DES SOUS-SYSTÈMES DE SOUDAGE

(30) Priority: 19.12.2014 US 201414576684
(43) Date of publication of application: 25.10.2017
(73) Proprietor: Illinois Tool Works Inc., Glenview, IL 60025 (US)
(72) Inventor: DENIS, Marc Lee, Glenview, Illinois 60025 (US)
(74) Representative: Trinks, Ole
(86) International application number: PCT/US2015/059644
(87) International publication number: WO 2016/099700

(56) References cited:
- WO-A1-2012/015942
- WO-A2-03/005380
- JP-A- H0 614 479
- JP-A- 2010 283 913

## Description

### BACKGROUND

The present disclosure relates generally to the field of welding systems and, more particularly, to methods and systems for harvesting weld cable energy.

In typical welding systems, subsystems and accessories are powered by additional welding cables or batteries. However, additional welding cables may lead to unnecessary clutter around a weld site. Moreover, batteries may lose power during welding operations, leading to operator confusion and loss of welding information during the welding process. Accordingly, it is desirable to power welding subsystems and accessories without providing physical connections or increasing the weight of components with larger batteries.

### BRIEF DESCRIPTION

In one embodiment, a system for harvesting energy from a weld cable includes an energy harvesting device positioned proximate to the weld cable and configured to inductively draw electrical energy from the weld cable. The energy harvesting system also includes a rectifier electrically coupled to the energy harvesting device and configured to convert the electrical energy harvested from the weld cable into a direct electrical current. Additionally, the energy harvesting system includes a voltage regulator electrically coupled to the rectifier. The voltage regulator is configured to receive the direct electrical current from the rectifier and to convert the direct electrical current received from the rectifier to a desired voltage.

In another embodiment, a welding system includes a welding power supply unit configured to supply electrical energy and a welding torch electrically coupled to the welding power supply unit via a weld cable. The welding system also includes an energy harvesting device positioned proximate to the weld cable and configured to draw electrical energy from the weld cable without direct electrical contact with the weld cable. Moreover, the welding system includes a voltage regulator and controller configured to receive the electrical energy from the energy harvesting device and a welding accessory including a wireless transceiver. The welding accessory is configured to receive and consume electrical energy from the voltage regulator and controller. The welding system also includes an energy storage element configured to receive and store electrical energy received from the voltage regulator and controller.

In a further embodiment, a method for harvesting energy from a weld cable includes positioning an energy harvesting device proximate to the weld cable. The energy harvesting device is configured to inductively harvest energy from electrical current through the weld cable. The method further includes transferring the energy to a voltage regulator configured to convert the energy to a desired voltage. The method also includes outputting the desired voltage to an energy-consuming device.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an embodiment of a welding system that may utilize energy harvesting devices, in accordance with embodiments of the present disclosure;
FIG. 2 is a block diagram of an embodiment of an energy harvesting system, in accordance with embodiments of the present disclosure;
FIG. 3 is a schematic diagram of an embodiment of an energy harvesting device coupled to a weld cable, in accordance with embodiments of the present disclosure;
FIG. 4 is a schematic diagram of an embodiment of an energy harvesting device coupled to a weld cable, in accordance with embodiments of the present disclosure;
FIG. 5 is a block diagram of an embodiment of a voltage regulator and controller of the energy harvesting system of FIG. 2, in accordance with embodiments of the present disclosure; and
FIG. 6 is a flow chart of an embodiment of a method for harvesting electrical energy from a weld cable, in accordance with embodiments of the present disclosure.

### DETAILED DESCRIPTION

The embodiments described herein include systems and methods for harvesting electrical energy from a weld cable to power welding subsystems and accessories. For example, an energy harvesting system may be incorporated into a welding system to harvest electrical energy from current fluctuations in the weld cable. An energy harvesting device may be positioned proximate to the weld cable. In certain embodiments, the energy harvesting device is a wire wound around the weld cable. As a varying current (e.g., an alternating current or a direct current with ripple effects) flows through the weld cable, a current is induced in the coupled wire of the energy harvesting device, thereby transferring energy from the weld cable to the energy harvesting device. In other embodiments, the energy harvesting device may be positioned proximate to the weld cable to capture current fluctuations. In certain embodiments, the energy harvesting system may include a rectifier, a voltage regulator, and other components to transform the captured energy to a desired voltage. Furthermore, in certain embodiments, the energy harvesting system is configured to supply operational energy to a wireless transceiver. Although described herein as relating to systems and methods for harvesting electrical energy from a weld cable, the systems and methods described herein may be used within other welding subsystems and accessories, such as those disclosed in U.S. Patent Application Serial No. 14/576,503, entitled "SYSTEMS FOR ENERGY HARVESTING USING WELDING SUBSYSTEMS", in the name of Marc Lee Denis et al., filed December 19, 2014, which is hereby incorporated herein by reference in its entirety for all purposes.

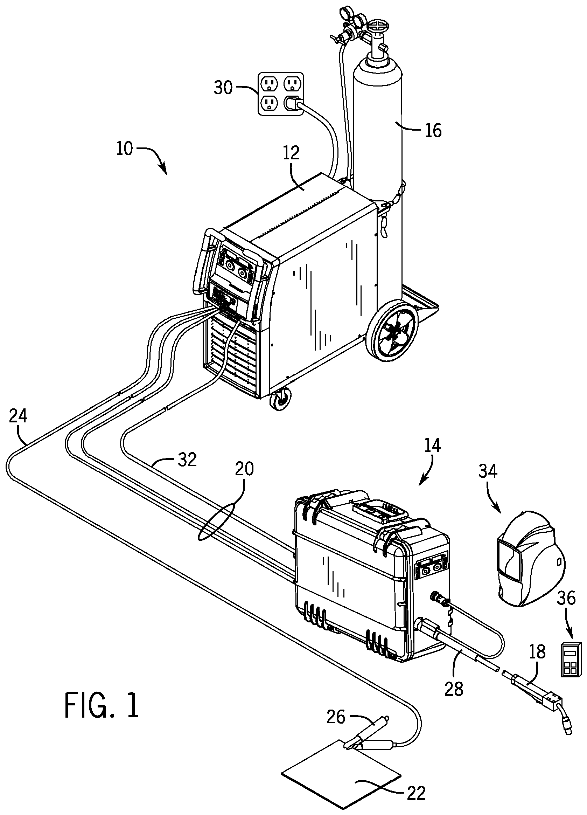

Turning to the figures, FIG. 1 is a diagram of an embodiment of a welding system 10 that may include an energy harvesting system, in accordance with embodiments of the present disclosure. It should be appreciated that, while the welding system 10 described herein is specifically presented as a gas metal arc welding (GMAW) system 10, the presently disclosed energy harvesting system may also be used with other arc welding processes (e.g., FCAW, FCAW-G, GTAW, SAW, SMAW, or similar arc welding processes) or other metal fabrication systems, such as plasma cutting systems, induction heating systems, and so forth. As described in greater detail below, all equipment and accessories used in the welding system 10 may include the energy harvesting devices. The welding system 10 includes a welding power supply unit 12 (i.e., a welding power source), a welding wire feeder 14, a gas supply system 16, and a welding torch 18. The welding power supply unit 12 generally supplies power for the welding system 10 and other various accessories, and may be coupled to the welding wire feeder 14 via a weld cable 20 as well as coupled to a workpiece 22 using a lead cable 24 having a clamp 26. In the illustrated embodiment, the welding wire feeder 14 is coupled to the welding torch 18 via a weld cable 28 in order to supply welding wire and power to the welding torch 18 during operation of the welding system 10. In another embodiment, the welding power supply unit 12 may couple and directly supply power to the welding torch 18.

In the embodiment illustrated in FIG. 1, the welding power supply unit 12 may generally include power conversion circuitry that receives input power from an alternating current power source 30 (e.g., the AC power grid, an engine/generator set, or a combination thereof), conditions the input power, and provides DC or AC output power via the weld cable 20. For example, the welding power supply unit 12 may supply a DC output having ripple effects (e.g., spikes or variances). Additionally, the AC output may have current fluctuations. As such, the welding power supply unit 12 may power the welding wire feeder 14 that, in turn, powers the welding torch 18, in accordance with demands of the welding system 10. The lead cable 24 terminating in the clamp 26 couples the welding power supply unit 12 to the workpiece 22 to close the circuit between the welding power supply unit 12, the workpiece 22, and the welding torch 18. The welding power supply unit 12 may include circuit elements (e.g., transformers, rectifiers, switches, and so forth) capable of converting the AC input power to a direct current electrode positive (DCEP) output, direct current electrode negative (DCEN) output, DC variable polarity, or a variable balance (e.g., balanced or unbalanced) AC output, as dictated by the demands of the welding system 10 (e.g., based on the type of welding process performed by the welding system 10, and so forth).

The illustrated welding system 10 includes a gas supply system 16 that supplies a shielding gas or shielding gas mixtures to the welding torch 18. In the depicted embodiment, the gas supply system 16 is directly coupled to the welding torch 18 via a gas conduit 32 that is part of the weld cable 20 from the welding power supply unit 12. In another embodiment, the gas supply system 16 may instead be coupled to the welding wire feeder 14, and the welding wire feeder 14 may regulate the flow of gas from the gas supply system 16 to the welding torch 18. A shielding gas, as used herein, may refer to any gas or mixture of gases that may be provided to the arc and/or weld pool in order to provide a particular local atmosphere (e.g., shield the arc, improve arc stability, limit the formation of metal oxides, improve wetting of the metal surfaces, alter the chemistry of the weld deposit, and so forth).

In addition, in certain embodiments, other welding equipment and welding accessories (e.g., welding-related devices) may be used in the welding system 10. For example, in most welding applications, a welding helmet 34 may be worn by an operator of the welding system 10. The welding helmet 34 provides protection to the operator of the welding system 10, particularly protecting the eyes of the operator from the flashing associated with the welding arc during welding operations. In addition, in certain embodiments, the welding helmet 34 may provide feedback to the operator related to parameters of the welding operations. For example, the welding helmet 34 may include an internal display configured to display the welding parameters to the operator during the welding operations. In addition, in certain embodiments, a welding accessory 36 (also referred to as a welding subsystem) may be used to communicate between the welding wire feeder 14 and the welding torch 18. For example, the welding accessory 36 may be a remote control (e.g., wireless or wired), a sensor, an energy storage device (e.g., a battery, a super capacitor, a fuel cell, etc.), or the like. Additionally, the welding accessory 36 is a device that may be used at a welding application remote from an associated welding power supply unit 12 and/or welding wire feeder 14.

The welding equipment and accessories illustrated in FIG. 1 are merely exemplary and not intended to be limiting of the types of welding equipment and accessories that may be used in the welding system 10 and include energy harvesting devices. As will be appreciated, welding systems 10 may sometimes become somewhat complex with the number of welding equipment and accessories that are included in the welding systems 10.

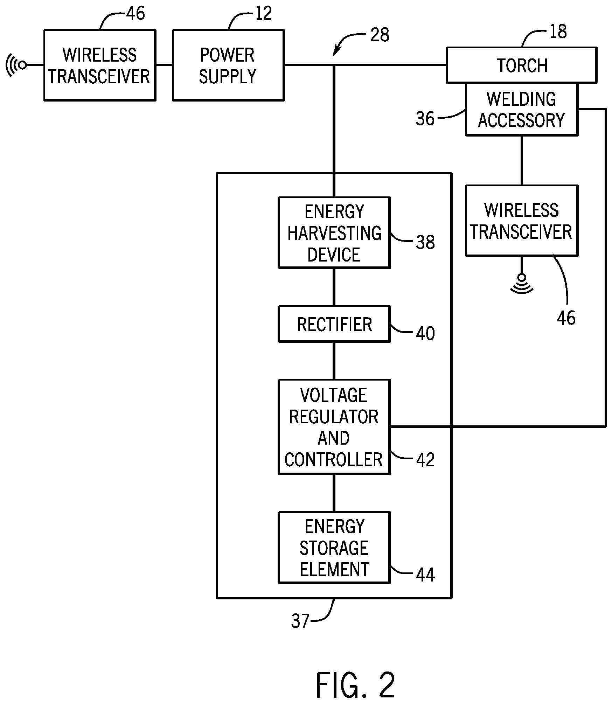

FIG. 2 is a schematic diagram of an embodiment of an energy harvesting system 37 coupled to the weld cable 28 of the welding system 10. Although primarily illustrated and described herein as harvesting energy from the weld cable 28, it will be appreciated that the energy harvesting systems 37 described herein may also harvest energy from the weld cable 20. In the illustrated embodiment, an energy harvesting device 38 of the energy harvesting system 37 is positioned between the welding power supply unit 12 and the welding torch 18. As described above, the welding power supply unit 12 may be coupled to the welding torch 18 via the weld cable 28. During welding operations, the current in the weld cables 20, 28 may fluctuate, establishing periodic and random current variations. The energy harvesting device 38 is configured to utilize the variations in the welding current to draw electrical energy (e.g., inductively) from the weld cable 28 and to distribute the energy harvested from the weld cable 28 (e.g., via a wired connection) to one or more welding-related devices, such as the welding accessory 36 illustrated in FIG. 1. In certain embodiments, the energy harvesting device 38 draws electrical energy from the weld cable 28 without direct electrical contact with the weld cable 28 (e.g., without directly contacting a conductor of the weld cable 28).

As mentioned above, current fluctuations in the weld cable 28 are captured by the energy harvesting device 38. In certain embodiments, the energy harvesting device 38 is electrically coupled to a rectifier 40 to convert the captured current from alternating current (AC) to direct current (DC). In other words, the rectifier 40 is configured to convert the electrical energy harvested from the weld cable 28 by the energy harvesting device 38 into a direct electrical current. For example, in certain embodiments, the rectifier 40 may be a full-wave bridge, half-wave bridge, or the like. Also, in certain embodiments, the rectifier 40 may include diodes or a specially configured transistor device, such as a MOSFET. In the illustrated embodiment, the rectifier 40 is electrically coupled to a voltage regulator and controller 42. The voltage regulator and controller 42 contains circuitry to filter and regulate the energy received from the rectifier 40. For example, the voltage regulator and controller 42 may regulate an output voltage (e.g., output a desired voltage) to accommodate electrical requirements of the welding-related devices, such as the welding accessory 36 illustrated in FIG. 1. As such, the voltage regulator and controller 42 may transmit operational energy (e.g., the desired voltage) to the welding accessory 36 even though the welding accessory 36 is not in direct electrical contact with the weld cable 28 (e.g., the welding accessory 36 does not receive operational energy via direct electrical connection with the weld cable). Additionally, the voltage regulator and controller 42 may include circuitry (e.g., a microprocessor coupled to a memory) configured to execute programming instructions to provide an indication to the operator (e.g., an audible alert, a displayed value, etc., generated via an audio device and/or display device on the energy harvesting system 37 and/or the welding accessory 36) of the energy received by the voltage regulator and controller 42 from the rectifier 40. For example, the circuitry may provide an indication that the rectifier 40 is delivering sufficient operational energy for the welding-related devices, such as the welding accessory 36, and also to send remaining energy to an energy storage element 44 for later use. In other words, the energy storage element 44 is configured to receive and to store the energy received from the voltage regulator and controller 42. In certain embodiments, the energy storage element 44 may be a rechargeable battery (e.g., a lithium-ion battery, a lithium-magnesium battery, a lead acid battery), a low leakage capacitor, a super capacitor, a fuel cell, a solid state energy storage device (e.g., a silicon-based capacitor), or any chemically based energy storage device.

In certain embodiments, the system may include wireless transceivers 46 having wireless communication circuitry. As used herein, a wireless transceiver refers to a device capable of sending and/or receiving wireless signals. For example, the wireless transceivers 46 may include IEEE 802.11x-based WI-FI wireless transceivers, IEEE 802.15.1 BLUETOOTH wireless transceivers, IEEE 802.15.4 ZIGBEE™ wireless transceivers, cellular transceivers (e.g., 4G or LTE cellular networks), or the like. For example, the wireless transceiver 46 may be coupled to the welding power supply unit 12 or to the welding accessory 36. As such, the wireless transceiver 46 may be configured to send and receive signals between the welding power supply unit 12 and the welding accessory 36, for example. However, in other embodiments, the system may include hard-wired communications or any other suitable communication devices.

During the welding operation, the energy harvesting device 38 transforms energy from the fluctuations in the weld cable 28 and sends the energy to the rectifier 40. The rectifier 40 transfers the energy to the voltage regulator and controller 42, for filtering and voltage regulation. In certain embodiments, the voltage regulator and controller 42 transmits the energy to the welding accessory 36 for consumption. As shown, the welding accessory 36 may be mounted on the welding torch 18, but in other embodiments the welding accessory 36 may be separate from the welding torch 18. The welding accessory 36 may include the wireless transceiver 46 that may receive and consume operational energy from the energy harvesting system 37. As a result, an additional wired connection to the welding torch 18 may be eliminated. Additionally, in certain embodiments, the voltage regulator and controller 42 may transmit energy to the energy storage element 44.

In certain embodiments, the energy harvesting device 38, the rectifier 40, and the voltage regulator and controller 42 may be enclosed in a common housing (e.g., within or on the welding power supply unit 12, welding wire feeder 14, welding torch 18, welding accessory 36, or other welding-related device associated with the welding system 10). For example, the energy harvesting system 37 may be coupled to the welding torch 18. However, in other embodiments, the components of the energy harvesting system 37 may be disposed in separate housings throughout the welding system 10 (e.g., the welding power supply unit 12, welding wire feeder 14, welding torch 18, welding accessory 36, or other welding-related device associated with the welding system 10). For example, the energy harvesting device 38 may be coupled to the weld cable 28 while the rectifier 40 and the voltage regulator and controller 42 are disposed on the welding accessory 36.

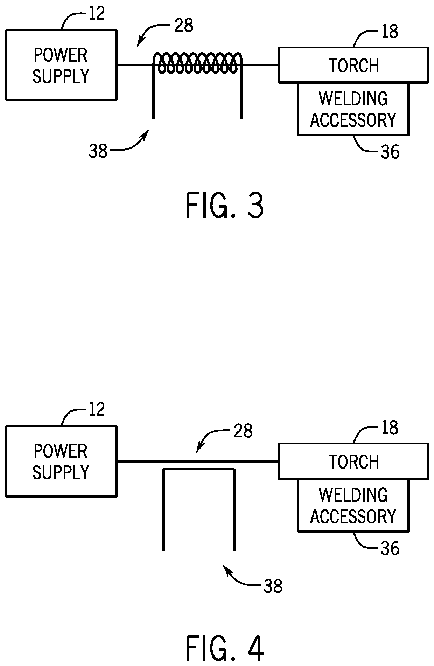

FIG. 3 is a schematic diagram of the energy harvesting device 38 positioned on the weld cable 28 to receive fluctuations in welding current. In the illustrated embodiment, the energy harvesting device 38 is an inductively coupled element wound around the weld cable 28. The energy harvesting device 38 may be a wire (e.g., copper) loop positioned proximate to the weld cable 28. As a result, current flowing through the weld cable 28 induces a current in the energy harvesting device 38 (e.g., through the inductive loop coupling element). As mentioned above, the current is transferred to the rectifier 40 and/or the voltage regulator and controller 42 for filtering and later distribution through the welding system 10 (e.g., to the welding accessory 36). While the illustrated embodiment depicts a wire wrapped around the weld cable 28, in other embodiments the energy harvesting device 38 may be an element that is "hung" or clipped to the weld cable 28. For example, the energy harvesting device 38 may include clips to attach the wire directly to or proximate to the weld cable 28, but without making a direct ohmic contact. That is, the energy from the weld cable 28 is transferred through an inductive coupling mechanism.

FIG. 4 is a schematic diagram of another embodiment of the energy harvesting device 38 positioned adjacent the weld cable 28. In the illustrated embodiment, a wire of the energy harvesting device 38 is positioned proximate to the weld cable 28 to receive the fluctuations in current through the weld cable 28. The position of the wire proximate to the weld cable 28 enables an inductive coupling of the fluctuations in the current. As a result, the wire of the energy harvesting device 38 receives energy from the weld cable 28 to provide operational energy to welding-related subsystems of the welding system 10, such as the welding accessory 36 (e.g., while the welding accessory 36 does not receive operational energy via direct electrical connection with the weld cable).

Additionally, the welding current fluctuations may occur both randomly and with some periodicity. Modern welding power supplies utilize switching inverter topologies which create sinusoidal frequency artifacts at many 10's of KHz on the weld cable. Therefore, in another embodiment, the energy harvesting device 38 includes a dynamically tunable resonant circuit (e.g., a resonant coupling structure) so as to more efficiently couple the circuit to a specified range of frequencies on the weld cable 28 wherein significant energy can be scavenged. The resonant frequency may be modified over a range of adjustment based upon a closed loop software algorithm, executed on a microcontroller, or in hardware, such as an operational amplifier and the like, so as to maximize the energy transfer versus time. Accordingly, a coupling bandwidth, a coupling frequency, and a coupling coefficient of the resonant coupling structure may be adjustable. Additionally, in certain embodiments, the resonant circuit may not be tunable. For example, the fluctuations of the weld cable 28 may have a particular frequency that enables energy harvesting. As a result, the resonant circuit may be tuned to the frequency to enable energy harvesting.

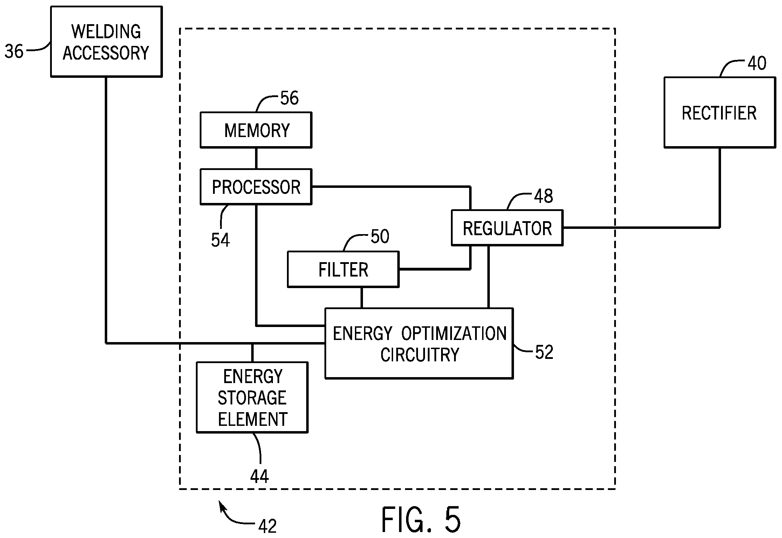

FIG. 5 is a schematic diagram of the energy storage and transfer components of the welding system 10. As described above, the rectifier 40 is electrically coupled to the voltage regulator and controller 42. The voltage regulator and controller 42 is configured to receive energy from the rectifier 40 and process the energy (e.g., filter, decrease the voltage, etc.) before transmitting the energy to the welding accessory 36 and/or the energy storage element 44. In the illustrated embodiment, the voltage regulator and controller 42 includes a regulator 48, a filter 50, an energy optimization circuitry 52, a processor 54, and a memory 56. By utilizing different components of the voltage regulator and controller 42, energy received from the weld cable 28 via the energy harvesting device 38 may be transmitted to the welding accessory 36 and/or the energy storage element 44.

In the illustrated embodiment, the regulator 48 receives energy from the rectifier 40 and supplies the energy (e.g., the desired voltage) to the welding accessory 36 and the energy storage element 44. For example, the regulator 48 may convert and stabilize the energy received from the rectifier 40. Moreover, in other embodiments, the regulator 48 may reduce the energy supplied to the welding accessory 36 and/or the energy storage element 44. In certain embodiments, the regulator 48 may be a circuit having resistors to reduce the output voltage from the regulator 48, an automatic regulator, a voltage regulator module, or the like. The regulator 48 is communicatively coupled to the filter 50, the energy optimization circuitry 52, and the processor 54. Therefore, the regulator 48 may output energy to the filter 50 for further processing (e.g., noise removal, and so forth) before the energy is transferred to the welding accessory 36 and/or the energy storage element 44. However, in certain embodiments, the regulator 48 may directly output the energy to the energy optimization circuitry 52. Furthermore, while the illustrated embodiment includes the regulator 48 before (e.g., upstream of) the filter 50, in other embodiments, the energy received from the rectifier 40 may be filtered by the filter 50 before (e.g., upstream) the voltage is controlled by the regulator 48. Additionally, the regulator 48 may receive signals from the processor 54. For example, the processor 54 may send a signal to the regulator 48 indicating a desired output voltage (e.g., which may be determined by the operational voltage of the welding accessory 36 or the wireless transceiver 46). Based on the signal received from the processor 54, the regulator 48 may output the desired output voltage to provide operational energy for the welding-related device (e.g., the welding accessory 36, the wireless transceiver 46, and so forth).

Energy supplied to the voltage regulator and controller 42 may be intermittent due to the on and off reality of the welding process as the arc current is active only when welding. Additionally, in certain embodiments, a direct current flowing through the weld cable 28 may have ripple effects causing fluctuations in the energy supplied by the weld cable 28. Accordingly, the energy optimization circuitry 52 may be configured to efficiently supply operational energy to the welding accessory 36 and/or the energy storage element 44. For example, during periods of low or intermittent energy input, the energy optimization circuitry 52 may direct energy to the welding accessory 36 from the energy storage element 44 instead of from the energy harvesting device 38 (e.g., to charge an integrated battery of the welding accessory 36). However, the energy optimization circuitry 52 may receive a signal from the welding accessory 36 indicating a full charge of the integrated battery. As a result, the energy optimization circuitry 52 may redirect energy to the energy storage element 44 for use during periods of high energy input from the energy harvesting device 38. Furthermore, the energy optimization circuitry 52 may be configured to communicate with the processor 54. For example, the processor 54 may send a signal to the energy optimization circuitry 52 directing that the energy optimization circuitry 52 transmit the electrical energy to the energy harvesting device 38 instead of the welding accessory 36, or vice versa. Accordingly, the energy optimization circuitry 52 may regulate the flow of the electrical energy received from the energy harvesting device 38 between the welding accessory 36 and the energy storage element 44.

As mentioned above, the processor 54 may send signals to the regulator 48 and/or the energy optimization circuitry 52 to control the functionality of the voltage regulator and controller 42. For example, the processor 54 may send a signal to the energy optimization circuitry 52 to direct energy to the energy storage element 44 instead of the welding accessory 36. The memory 56 may be any type of non-transitory machine readable medium for storing data and executable instructions, such as random-access memory, read-only memory, rewritable flash memory, hard drives, optical discs, and the like. The processor 54 may execute instructions stored on the memory 56. For example, the memory 56 may contain machine readable code, such as instructions that may be executed by the processor 54. In some embodiments, the memory 56 and processor 54 may enable automatic (e.g., processor/memory controlled) operation of the voltage regulator and controller 42 and/or the welding system 10.

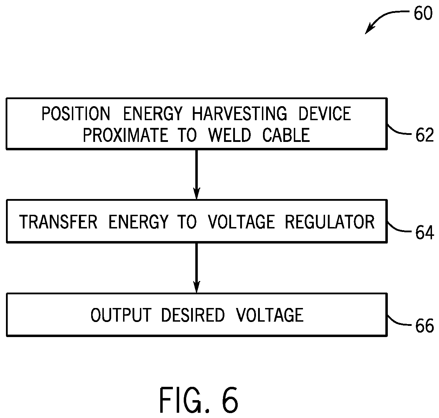

FIG. 6 is a flow chart of an embodiment of a method 60 for harvesting energy from a weld cable 28. The energy harvesting device 38 is placed proximate to the weld cable 28 at block 62. For example, in certain embodiments, the energy harvesting device 38 may utilize inductive coupling by being wrapped around the weld cable 28. As a result, current fluctuations in the weld cable 28 will induce a current across the energy harvesting device 38. However, in other embodiments, capacitive pickup, electromagnetic coupling, or the like may be utilized to receive energy from the weld cable 28. In certain embodiments, the energy received by the energy harvesting device 38 is converted to DC via the rectifier 40. For instance, the rectifier 40 may include a full-wave bridge to generate the DC. The energy is transferred to the voltage regulator and controller 42 at block 64. The voltage regulator and controller 42 outputs the energy received from the energy harvesting device 38 at block 66. For example, the voltage regulator and controller 42 may distribute energy to the welding accessory 36 and/or to the energy storage element 44. As a result, current fluctuations in the weld cable 28 may be utilized to provide operational energy to auxiliary components of the welding system 10.

As described in detail above, the energy harvesting device 38 is positioned proximate to the weld cable 28 to harvest energy from fluctuations in the current through the weld cable 28. In certain embodiments, the energy harvesting device 38 transfers the energy from the weld cable 28 to the rectifier 40 for processing (e.g., conversion to DC) and subsequent transfer to the voltage regulator and controller 42. The voltage regulator and controller 42 is configured to process the signal (e.g., filter, regulate, etc.) and distribute the energy to the welding accessory 36 and/or the energy storage element 44. Accordingly, welding accessory 36 (or other welding-related device associated with the welding system 10) may be obtain operational energy from the energy harvesting device 38, thereby reducing the size of onboard storage devices on the welding accessory 36 (or other welding-related device associated with the welding system 10) and reducing the number of physical electrical connectors in the welding system 10.

## Claims

1. A system (37) for harvesting energy from a weld cable (28), comprising:
- an energy harvesting device (38) positioned proximate to the weld cable (28) and configured to inductively draw electrical energy from the weld cable (28);
- a rectifier (40) electrically coupled to the energy harvesting device (38) and configured to convert the electrical energy harvested from the weld cable (28) into a direct electrical current; and
- a voltage regulator (42) electrically coupled to the rectifier (40), wherein the voltage regulator (42) is configured to receive the direct electrical current from the rectifier (40) and to convert the direct electrical current received from the rectifier (40) to a desired voltage, and
- an energy storage element (44) electrically coupled to the voltage regulator (42), wherein the energy storage element (44) is configured to receive and to store energy received from the voltage regulator (42);
**characterized by**
an energy optimization circuitry (52) electrically coupled to the energy harvesting device (38) and configured to receive the electrical energy from the energy harvesting device (38), wherein the energy optimization circuitry (52) regulates the flow of the electrical energy received from the energy harvesting device (38) between a welding accessory (36) and the energy storage element (44).

2. The system of claim 1,
wherein the energy storage element (44) comprises a rechargeable battery, a low leakage capacitor, a super capacitor, a fuel cell, a solid state energy storage device, or a combination thereof.

3. The system of claim 1 or 2,
comprising a wireless transceiver (46) having wireless communication circuitry powered by the desired voltage.

4. The system of claim 3,
wherein the wireless transceiver (46) is an IEEE 802.11x-based WI-FI wireless transceiver, an IEEE 802.15.1 BLUETOOTH wireless transceiver, an IEEE 802.15.4 ZIGBEE™ wireless transceiver, or any other wireless transceiver.

5. The system of one of the preceding claims,
comprising a resonant coupling structure having a tunable resonant frequency via local closed loop control, wherein the resonant coupling structure is positioned proximate to the weld cable (28) and configured to draw the electrical energy from the weld cable.

6. The system of claim 5,
wherein the resonant frequency is non-adjustable.

7. The system of claim 6,
wherein a coupling bandwidth, a coupling frequency, and a coupling coefficient of the resonant coupling structure is adjustable.

8. The system of one of the preceding claims,
wherein the voltage regulator (42) is electrically coupled to a welding accessory (36) and the voltage regulator (42) is configured to transmit the desired voltage to the welding accessory (36) to supply operational energy to the welding accessory while the welding accessory (36) does not receive operational energy via direct electrical connection with the weld cable (28).

9. A welding system (10), comprising:
- a welding power supply unit (12) configured to supply electrical energy via a weld cable (28);
- an energy harvesting system (37) as defined in one of claims 1 to 8; and
- a welding accessory (36) comprising a wireless transceiver (46), wherein the welding accessory (36) is configured to receive and consume electrical energy from the voltage regulator (42).

10. The welding system of claim 9,
wherein the wireless transceiver (46) is an IEEE 802.11x-based WI-FI wireless transceiver, an IEEE 802.15.1 BLUETOOTH wireless transceiver, an IEEE 802.15.4 ZIGBEE™ wireless transceiver, or any other wireless transceiver.

11. The welding system of claim 9 or 10,
wherein the welding accessory (36) is a sensor, a battery operated remote control, a battery, or a combination thereof.

12. A method for harvesting energy from a weld cable, comprising:
- positioning an energy harvesting device (38) proximate to the weld cable, wherein the energy harvesting device (38) is configured to inductively harvest energy from electrical current through the weld cable (28);
- transferring the energy to a voltage regulator (42) configured to convert the energy to a desired voltage; and
- outputting the desired voltage to an energy-consuming device,
**characterized by**
- regulating the output of the energy harvested by the energy harvesting device (38) to an energy storage element (44) and to the energy consuming device.

13. The method of claim 12,
comprising distributing the energy from the energy storage element (44) to a welding-related device at the desired voltage.

14. The method of claim 12 or 13,
wherein outputting the desired voltage to the energy-consuming device comprises distributing the desired voltage to a welding accessory (36) configured to receive the desired voltage to provide operational energy for the welding accessory.

15. The method of one of claims 12 to 14,
comprising converting the energy harvested by the energy harvesting device (38) into a direct electrical current via a rectifier (40).

## Patentansprüche

1. System (37) zur Energiegewinnung von einem Schweißkabel (28), umfassend:
- eine Energiegewinnungseinrichtung (38), die in der Nähe des Schweißkabels (28) positioniert ist und dazu ausgelegt ist, elektrische Energie induktiv von dem Schweißkabel (28) zu ziehen;
- einen Gleichrichter (40), der elektrisch mit der Energiegewinnungseinrichtung (38) gekoppelt ist und dazu ausgelegt ist, die von dem Schweißkabel (28) gewonnene elektrische Energie in einen elektrischen Gleichstrom umzuwandeln; und
- einen Spannungsregler (42), der elektrisch mit dem Gleichrichter (40) gekoppelt ist, wobei der Spannungsregler (42) dazu ausgelegt ist, den elektrischen Gleichstrom von dem Gleichrichter (40) zu empfangen und den von dem Gleichrichter (40) empfangenen elektrischen Gleichstrom zu einer gewünschten Spannung umzuwandeln, und
- ein Energiespeicherelement (44), das elektrisch mit dem Spannungsregler (42) gekoppelt ist, wobei das Energiespeicherelement (44) dazu ausgelegt ist, von dem Spannungsregler (42) empfangene Energie zu empfangen und zu speichern;
**gekennzeichnet durch**
einen Energieoptimierungsschaltkreis (52), der elektrisch mit der Energiegewinnungseinrichtung (38) gekoppelt ist und dazu ausgelegt ist, die elektrische Energie von der Energiegewinnungseinrichtung (38) zu empfangen, wobei der Energieoptimierungsschaltkreis (52) den Fluss der von der Energiegewinnungseinrichtung (38) empfangenen elektrischen Energie zwischen einem Schweißzubehör (36) und dem Energiespeicherelement (44) zu regeln.

2. System nach Anspruch 1,
wobei das Energiespeicherelement (44) eine wiederaufladbare Batterie, einen leckarmen Kondensator, einen Superkondensator, eine Brennstoffzelle, eine Festkörper-Energiespeichereinrichtung oder eine Kombination davon umfasst.

3. System nach Anspruch 1 oder 2,
umfassend einen drahtlosen Sendeempfänger (46) mit einem Drahtloskommunikationsschaltkreis, der durch die gewünschte Spannung mit Leistung versorgt wird.

4. System nach Anspruch 3,
wobei der drahtlose Sendeempfänger (46) ein IEEE-802.11x-basierter drahtloser WiFi-Sendeempfänger, ein drahtloser IEEE-802.15.1-BLUETOOTH-Sendeempfänger, ein drahtloser IEEE-802.15.4-ZIGBEE™-Sendeempfänger oder ein beliebiger anderer drahtloser Sendeempfänger ist.

5. System nach einem der vorangegangenen Ansprüche, umfassend eine Resonanzkopplungsstruktur mit einer abstimmbaren Resonanzfrequenz über eine lokale Regelung, wobei die Resonanzkopplungsstruktur in der Nähe des Schweißkabels (28) positioniert ist und dazu ausgelegt ist, die elektrische Energie von dem Schweißkabel zu ziehen.

6. System nach Anspruch 5,
wobei die Resonanzfrequenz nicht anpassbar ist.

7. System nach Anspruch 6,
wobei eine Kopplungsbandbreite, eine Kopplungsfrequenz und ein Kopplungskoeffizient der Resonanzkopplungsstruktur anpassbar sind.

8. System nach einem der vorangegangenen Ansprüche, wobei der Spannungsregler (42) elektrisch mit einem Schweißzubehör (36) gekoppelt ist und der Spannungsregler (42) dazu ausgelegt ist, die gewünschte Spannung zu dem Schweißzubehör (36) zu übertragen, um Betriebsenergie zu dem Schweißzubehör zu liefern, während das Schweißzubehör (36) keine Betriebsenergie über eine direkte elektrische Verbindung mit dem Schweißkabel (28) empfängt.

9. Schweißsystem (10), umfassend:
- eine Schweißleistungsversorgungseinheit (12), die dazu ausgelegt ist, elektrische Energie über ein Schweißkabel (28) zu liefern;
- ein Energiegewinnungssystem (37) wie in einem der Ansprüche 1 bis 8 definiert; und
- ein Schweißzubehör (36), das einen drahtlosen Sendeempfänger (46) umfasst, wobei das Schweißzubehör (36) dazu ausgelegt ist, elektrische Energie von dem Spannungsregler (42) zu empfangen und zu verbrauchen.

10. Schweißsystem nach Anspruch 9,
wobei der drahtlose Sendeempfänger (46) ein IEEE-802.11x-basierter drahtloser WiFi-Sendeempfänger,
ein drahtloser IEEE-802.15.1-BLUETOOTH-Sendeempfänger, ein drahtloser IEEE-802.15.4-ZIGBEE™-Sendeempfänger oder ein beliebiger anderer drahtloser Sendeempfänger ist.

11. Schweißsystem nach Anspruch 9 oder 10,
wobei das Schweißzubehör (36) ein Sensor, eine batteriebetriebene Fernsteuerung, eine Batterie oder eine Kombination davon ist.

12. Verfahren zur Energiegewinnung von einem Schweißkabel, umfassend:
- Positionieren einer Energiegewinnungseinrichtung (38) in der Nähe des Schweißkabels, wobei die Energiegewinnungseinrichtung (38) dazu ausgelegt ist, Energie induktiv von elektrischem Strom über das Schweißkabel (28) zu gewinnen;
- Transferieren der Energie zu einem Spannungsregler (42), der dazu ausgelegt ist, die Energie zu einer gewünschten Spannung umzuwandeln; und
- Ausgeben der gewünschten Spannung zu einer energieverbrauchenden Einrichtung,
**gekennzeichnet durch**
- Regeln der Ausgabe der durch die Energiegewinnungseinrichtung (38) gewonnenen Energie zu einem Energiespeicherelement (44) und zu der energieverbrauchenden Einrichtung.

13. Verfahren nach Anspruch 12,
umfassend Verteilen der Energie von dem Energiespeicherelement (44) zu einer schweißtechnischen Einrichtung mit der gewünschten Spannung.

14. Verfahren nach Anspruch 12 oder 13,
wobei das Ausgeben der gewünschten Spannung zu der energieverbrauchenden Einrichtung ein Verteilen der gewünschten Spannung zu einem Schweißzubehör (36) umfasst, das dazu ausgelegt ist, die gewünschte Spannung zu empfangen, um Betriebsenergie für das Schweißzubehör bereitzustellen.

15. Verfahren nach einem der Ansprüche 12 bis 14, umfassend Umwandeln der durch die Energiegewinnungseinrichtung (38) gewonnenen Energie über einen Gleichrichter (40) in einen elektrischen Gleichstrom.

## Revendications

1. Système (37) pour collecter de l'énergie à partir d'un câble de soudage (28) comprenant :
- un dispositif de collecte d'énergie (38) positionné à proximité du câble de soudage (28) et configuré pour tirer de l'énergie électrique de manière inductive à partir du câble de soudage (28) ;
- un redresseur (40) couplé électriquement au dispositif de collecte d'énergie (38) et configuré pour convertir l'énergie électrique collectée à partir du câble de soudage (28) en un courant électrique continu ; et
- un régulateur de tension (42) couplé électriquement au redresseur (40), dans lequel le régulateur de tension (42) est configuré pour recevoir le courant électrique continu en provenance du redresseur (40) et pour convertir le courant électrique continu reçu en provenance du redresseur (40) en une tension souhaitée, et
- un élément de stockage d'énergie (44) couplé électriquement au régulateur de tension (42), dans lequel l'élément de stockage d'énergie (44) est configuré pour recevoir et pour stocker de l'énergie en provenance du régulateur de tension (42) ;
**caractérisé par**
un ensemble de circuits d'optimisation d'énergie (52) couplé électriquement au dispositif de collecte d'énergie (38) et configuré pour recevoir l'énergie électrique en provenance du dispositif de collecte d'énergie (38), dans lequel l'ensemble de circuits d'optimisation d'énergie (52) régule la circulation de l'énergie électrique reçue du dispositif de collecte d'énergie (38) entre un accessoire de soudage (36) et l'élément de stockage d'énergie (44).

2. Système selon la revendication 1,
dans lequel l'élément de stockage d'énergie (44) comprend une batterie rechargeable, un condensateur à faible fuite, un supercondensateur, une pile à combustible, un dispositif de stockage d'énergie à semi-conducteur ou une combinaison de ces derniers.

3. Système selon la revendication 1 ou 2,
comprenant un émetteur-récepteur sans fil (46) ayant un ensemble de circuits de communication sans fil alimenté par la tension souhaitée.

4. Système selon la revendication 3,
dans lequel l'émetteur-récepteur sans fil (46) est un émetteur-récepteur sans fil Wi-Fi basé sur la norme IEEE 802.11x, un émetteur-récepteur sans fil BLUETOOTH IEEE 802.15.1, un émetteur-récepteur sans fil ZIGBEE™ IEEE 802.15.4 ou n'importe quel autre émetteur-récepteur sans fil.

5. Système selon l'une des revendications précédentes, comprenant une structure de couplage résonante ayant une fréquence de résonance accordable par le biais d'une commande en boucle fermée locale, dans lequel la structure de couplage résonante est positionnée à proximité de câble de soudage (28) et configurée pour tirer l'énergie électrique du câble de soudage.

6. Système selon la revendication 5,
dans lequel la fréquence de résonance n'est pas réglable.

7. Système selon la revendication 6,
dans lequel une largeur de bande de couplage, une fréquence de couplage et un coefficient de couplage de la structure de couplage résonante sont réglables.

8. Système selon l'une des revendications précédentes, dans lequel le régulateur de tension (42) est couplé électriquement à un accessoire de soudage (36) et le régulateur de tension (42) est configuré pour transmettre la tension souhaitée à l'accessoire de soudage (36) pour fournir de l'énergie opérationnelle à l'accessoire de soudage pendant que l'accessoire de soudage (36) ne reçoit pas l'énergie opérationnelle par le biais d'une connexion électrique directe avec le câble de soudage (28).

9. Système de soudage (10) comprenant :
- une unité d'alimentation électrique de soudage (12) configurée pour fournir de l'énergie électrique par le biais d'un câble de soudage (28) ;
- un système de collecte d'énergie (37) tel que défini selon l'une des revendications 1 à 8 ; et
- un accessoire de soudage (36) comprenant un émetteur-récepteur sans fil (46), dans lequel l'accessoire de soudage (36) est configuré pour recevoir et pour consommer de l'énergie électrique en provenance du régulateur de tension (42).

10. Système de soudage selon la revendication 9,
dans lequel l'émetteur-récepteur sans fil (46) est un émetteur-récepteur sans fil Wi-Fi basé sur la norme IEEE 802.11x, un émetteur-récepteur sans fil BLUETOOTH IEEE 802.15.1, un émetteur-récepteur sans fil ZIGBEE™ IEEE 802.15.4 ou n'importe quel autre émetteur-récepteur sans fil.

11. Système de soudage selon la revendication 9 ou 10, dans lequel l'accessoire de soudage (36) est un capteur, une télécommande alimentée par une batterie, une batterie ou une combinaison de ces derniers.

12. Procédé pour collecter de l'énergie à partir d'un câble de soudage, consistant :
- à positionner un dispositif de collecte d'énergie (38) à proximité du câble de soudage, dans lequel le dispositif de collecte d'énergie (38) est configuré pour collecter de manière inductive de l'énergie à partir d'un courant électrique au moyen du câble de soudage (28) ;
- à transférer l'énergie à un régulateur de tension (42) configuré pour convertir l'énergie en une tension souhaitée ; et
- à transmettre la tension souhaitée à un dispositif énergivore,
**caractérisé en ce qu'**il consiste
- à réguler la transmission de l'énergie collectée par le dispositif de collecte d'énergie (38) à un élément de stockage d'énergie (44) et au dispositif énergivore.

13. Procédé selon la revendication 12,
consistant à distribuer l'énergie depuis l'élément de stockage d'énergie (44) à un dispositif associé à un soudage à la tension souhaitée.

14. Procédé selon la revendication 12 ou 13,
dans lequel la transmission de la tension souhaitée au dispositif énergivore consiste à distribuer la tension souhaitée à un accessoire de soudage (36) configuré pour recevoir la tension souhaitée pour fournir de l'énergie opérationnelle pour l'accessoire de soudage.

15. Procédé selon l'une quelconque des revendications 12 à 14,
consistant à convertir l'énergie collectée par le dispositif de collecte d'énergie (38) en un courant électrique continu par le biais d'un redresseur (40) .
